# EUROPÄISCHE PATENTANMELDUNG

(11) **EP 3 246 777 A1**
(43) Veröffentlichungstag der Anmeldung: **22.11.2017**
(21) Anmeldenummer: 16170248.5
(22) Anmeldetag: 19.05.2016
(51) Int. Cl.: G05B 23/02

(54) **SYSTEM ZUM STEUERN UND ÜBERWACHEN TECHNISCHER PROZESSE UND ANLAGEN**

(71) Anmelder: ETM professional control GmbH, 7000 Eisenstadt (AT)
(72) Erfinder: EGGER, Andreas, 1200 Wien (AT); LI, Fei, 1220 Wien (AT); WACHMANN, Bernd, 2340 Mödling (AT); NAGELHOLZ, Markus, Wien (AT); SCHALL, Daniel, 1220 Wien (AT); SCHNEEWEISS, Paul, 1070 Wien (AT); MAD, Jörgen, 7000 Eisenstadt (AT)
(74) Vertreter: Maier, Daniel Oliver

(57) **Zusammenfassung**

Die Erfindung betrifft ein System zum Steuern und Überwachen technischer Prozesse und Anlagen, welches Mittel zur Erfassung, Speicherung und Auswertung prozess- und anlagenrelevanter Daten (ST, GS, DS), Mittel zur Visualisierung (PS) und Steuerungsmittel und Mittel zur Auslösung von Alarmen bei Über- oder Unterschreiten von Grenzwerten vorgegebener Prozess- oder Anlagenparameter umfasst, wobei in das System Entscheidungsunterstützungselemente (EE) integriert sind, welche auf Basis der gespeicherten prozess- und anlagenrelevanten Daten (DB)
- Prognosen über das zeitliche Auftreten von Fehlern und
- bei Auftreten eines Alarmes Hypothesen zur Ursache für die Über- oder Unterschreitung von Grenzwerten vorgegebener Prozess- oder Anlagenparameter erstellen.

## Beschreibung

Zur automatisierten Steuerung von Prozessen und Anlagen werden nach dem Stand der Technik sogenannte Supervisory Control and Data Acquisition (SCADA)- Systeme eingesetzt. Darunter versteht man Steuerungssysteme, welche Prozesse und Anlagen überwachen, visualisieren sowie steuern und regeln. Sie bilden dabei üblicherweise die zweite Ebene der Steuerung, welche die Funktion der prozessnahen ersten Steuerungsebene optimiert und Stellgrößen sowie Sollwerte vorgibt.

Ein wesentliches Element von SCADA-Systemen sind Alarme, welche kritische Prozesszustände anzeigen. Dazu werden vorgegebene Prozessparameter überwacht und bei Über- oder Unterschreiten eines Grenzwertes ein Alarm ausgelöst.

Bei komplexen Systemen mit einer Vielzahl von Komponenten und Abhängigkeiten ist es allerdings schwierig, aufgrund eines einzelnen Alarms die Ursache dafür festzustellen, bzw. zu beurteilen, ob durch die Grenzwertüberschreitung eines einzelnen Parameters auch tatsächlich Handlungsbedarf besteht.

Der Erfindung liegt daher die Aufgabe zugrunde, den Stand der Technik weiterzuentwickeln.

Erfindungsgemäß geschieht dies mit einem System gemäß Anspruch 1.

Vorteilhafte Ausgestaltungen ergeben sich aus den Unteransprüchen.

Der erfindungsgemäße Einsatz eines Entscheidungsunterstützungselements unterstützt den Bediener eines SCADA Systems bei der Entscheidungsfindung in kritischen Situationen.

Insbesondere in Fällen, die selten auftreten, sind die Bediener oftmals nicht in der Lage, von einem Alarm sofort auf die zugrunde liegende Fehlerursache zu schließen. Eine verzögerte oder gar eine falsche Reaktion in einem Fehlerfall kann aber zu Schäden im betroffenen Prozess oder der betroffenen Anlagen führen.

Entscheidungsunterstützungselemente (Decision Support Systems, - DSS) sind (Software)systeme, die relevante Informationen für bestimmte Aufgaben ermitteln, aufbereiten, übersichtlich zusammenstellen und auswerten.

Dazu gehören beispielsweise Funktionen zur Sortierung und Filterung von Daten, ihre flexible Darstellung sowie Auswertungsmöglichkeiten wie Summen oder Durchschnittsberechnungen, Vergleiche etc. Weiter gehende Funktionen erlauben die Ausführung von Modellrechnungen (Szenarien, Prognosen) und die Verknüpfung der Daten mit Optimierungsalgorithmen.

Die Erfindung wird anhand von Figuren näher erläutert. Es zeigen beispielhaft:
Fig. 1 den schematischen Aufbau eines erfindungsgemäßen Steuerungs-und Überwachungs-Systems
Fig. 2 die Schritte bei der Erstellung von Entscheidungsunterstützungselementen für ein Steuerungs-und Überwachungs-System
Fig.3 den Einsatz eines Entscheidungsunterstützungselementes zur Datenselektion und Clusteranalyse bei einem Elektromotor.

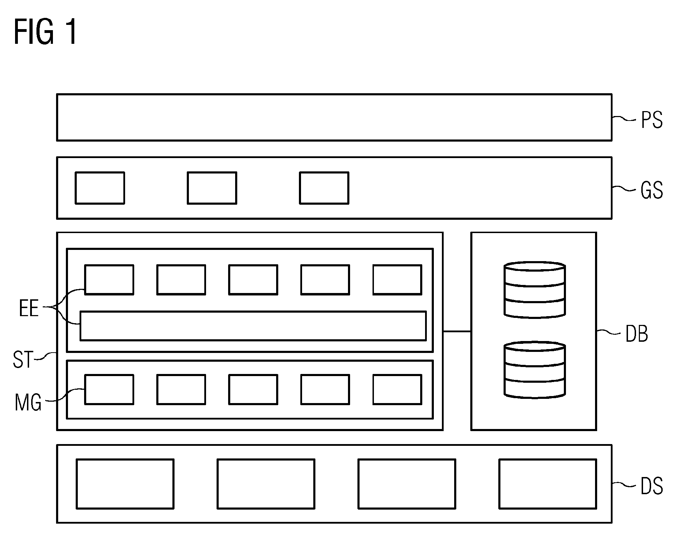

Das erfindungsgemäße Steuerungs- und Überwachungs-System nach Figur 1 beruht auf einem üblichen Supervisory Control and Data Acquisition (SCADA)- System wie es beispielsweise von der Siemens AG unter der Bezeichnung WinCC OA (Windows Control Center Open Architecture) vertrieben wird.
WinCC OA ist modular aufgebaut und ermöglicht die Überwachung und Steuerung technischer Prozesse von Maschinen und Anlagen.

Es ist als Client-Server-System ausgeführt, das auf verschiedenen Versionen der Betriebssysteme Microsoft Windows, Linux und Solaris läuft.

Mit WinCC OA sind sowohl einfache Einplatzanwendungen als auch komplexe Mehrplatzlösungen mit verteilten Clients und Servern realisierbar.

Wesentliche Produktmerkmale sind die frei projektierbare Bedienoberfläche zur Visualisierung und Bedienung von Maschinen und Anlagen, die Erfassung und Langzeitdatenhaltung von Messwerten, die Erfassung, Speicherung und Visualisierung von Alarmen und Meldungen sowie das Bereitstellen von Datenschnittstellen zu externen Systemen.

Typische Einsatzbereiche sind die Fertigungstechnik im Maschinenbau, die Automatisierung von verfahrenstechnischen Prozessen und die Steuerung und Visualisierung von Prozessen in Logistik-Systemen.

Branchenbezogen betrachtet, betreffen die Anwendungen Produktionsanlagen in der chemischen, pharmazeutischen oder in der Nahrungsmittelindustrie, sowohl für kontinuierliche Prozesse als auch für Batch-Verfahren, die Prozessvisualisierung und Steuerung in Kraftwerksanlagen, Öl- und Gasanlagen, für die Wasseraufbereitung und in Kläranlagen, diskrete Mensch-Maschine-Einheiten (Human-Machine-Interfaces) in Fertigungsanlagen wie im Maschinenbau und in der Automobil- oder Automobilzulieferindustrie.

Durch offene Schnittstellen, verfügbare Software-Optionen und projektspezifische Implementierung kann die Software an diese branchenspezifische Anforderungen angepasst werden.

In der Verkehrsleittechnik wird WinCC OA als Informationssystem bei der Überwachung von Autobahnen und Tunnelsystemen, in der Fördertechnik als Visualisierungskomponente des Materialflusssystems z. B. bei der Überwachung und Steuerung von Postsortieranlagen oder Gepäckförderanlagen in Flughäfen eingesetzt.

Zur Prozessführung werden für den Einsatzzweck individuell projektierbare Bedienoberflächen eingesetzt. WinCC OA weist hierfür einen Grafikeditor und eine Auswahl von Standardobjekten auf (z. B. Grafikobjekte, Buttons, Check- und Radio-Boxes und Slider, Eingabe- und Ausgabefeld, Textlisten oder konfigurierbare ActiveX Controls für Alarme, Kurven und Tabellen). Diese Standardobjekte können um anwenderspezifische Objekte oder ActiveX Controls erweitert werden.

Objekte werden im Grafikeditor mit Prozesswerten und Befehlen verknüpft. Es werden z. B. Messwerte visualisiert oder Zustandsmeldungen von Ventilen angezeigt. Gleichzeitig ist es möglich, durch Benutzereingaben per Maus oder Tastatur diese Objekte zu steuern. Für die Zuweisung von Prozesswerten und Befehlen stellt WinCC OA verschiedene Mechanismen zur Verfügung.

Die einfachste Variante ist das direkte Verschalten von Prozessvariablen an ein Objekt zur Anzeige eines Wertes oder einer Statusinformation. Weitere Möglichkeiten sind das dialoggeführte Verschalten von Variablen über sogenannte "Wizards" bis hin zur komplexen Szenarien, die über die integrierte Script-Sprache "Control" realisierbar sind.

In der schematischen Darstellung gemäß Fig. 1 auf Basis eines Schichtenmodells umfasst WinCC OA eine Präsentationsschicht PS, eine Geschäftslogikschicht GS, eine Steuerungsschicht ST und eine Datenzugriffsschicht DS.

Die Präsentationsschicht PS umfasst u.a. die individuell projektierbare Bedienoberflächen mit Grafikeditor.

Die Geschäftslogikschicht GS enthält die für den jeweiligen Einsatzzweck vorgesehenen Funktionalitäten.

In der Steuerungsschicht ST sind unter anderem die sogenannten "Manager" MG von WinCC OA enthalten. Darunter versteht man autonome Ausführungseinheiten, also Prozesse, die für alle wesentlichen Funktionalitäten vorgesehen sind und spezielle Aufgaben erfüllen. So gibt es beispielsweise eigene Manager für die Peripherieankopplung, für die historische Datenhaltung oder für die Bedienoberflächen. Darüber hinaus enthält die Steuerungsschicht auch die Datenbanken mit den Archiven für historische Daten.

Die Datenzugriffsschicht DS enthält die Anbindung an den zu steuernden und überwachenden Prozess.

Erfindungsgemäß werden nun Entscheidungsunterstützungselementen EE in ein WinCC OA SCADA -System integriert. Dazu werden entsprechende Modelle erstellt und mit Prozessdaten und Objekten verknüpft.

Die Aufgaben der Entscheidungsunterstützungselemente betreffen vorzugsweise die Analyse von Fehlern und daraus abgeleitet die Erstellung von Prognosen über das zeitliche Auftreten von Fehlern und bei Auftreten von Alarmen die Erstellung von Hypothesen zur Ursache der Alarme bzw. der zugrunde liegenden Fehler.

Dabei werden Methoden von Knowledge Discovery und Data Mining (KDD)- Prozessen genutzt.

KDD-Prozesse sind in üblicher Weise aus den folgenden Teilprozessen aufgebaut:
Der Bereitstellung von Hintergrundwissen, der Definition der Ziele der Wissensfindung, der Datenauswahl, Datenbereinigung, und Datenreduktion (z. B. durch Transformationen), der Auswahl eines Modells, in dem das gefundene Wissen repräsentiert werden soll, dem Data-Mining, d.h. der statistische Untersuchung der Daten um Muster zu erkennen, und der Interpretation der gewonnenen Erkenntnisse.

Üblicherweise werden diese Schritte mehrfach durchlaufen. Ein verbreitetes Vorgehensmodell ist dabei der sogenannte Cross-Industry Standard Process for Data-Mining (CRISP-DM).

Den Kern eines KDD-Prozesses bilden die Data-Mining-Analysen. Dafür typische Aufgabenstellungen können gegliedert werden in Beobachtungsprobleme wie Ausreißererkennung oder Clusteranalyse und Prognoseprobleme wie Klassifikation oder Regressionsanalyse.

Die Ausreißererkennung dient der Identifizierung von ungewöhnlichen Datensätzen, d.h. Ausreißern, Fehlern oder Änderungen.

Unter Clusteranalyse oder Ballungsanalyse versteht man Verfahren zur Entdeckung von Ähnlichkeitsstrukturen in umfangreichen Datenbeständen. Die so gefundenen Gruppen von "ähnlichen" Objekten werden als Cluster bezeichnet, die Gruppenzuordnung als Clustering. Die gefundenen Ähnlichkeitsgruppen können graphentheoretisch, hierarchisch, partitionierend oder optimierend sein.

Bei der Clusteranalyse ist das Ziel, neue Gruppen in den Daten zu identifizieren, im Gegensatz zur Klassifikation, bei der Daten bestehenden Klassen zugeordnet werden. Man spricht von einem "unsupervised process", da es nicht auf Klassen-Vorwissen angewiesen ist. Diese neuen Gruppen können anschließend beispielsweise zur automatisierten Klassifizierung herangezogen werden.

Die Regressionsanalyse dient der Identifizierung von Beziehungen zwischen abhängigen und unabhängigen Variablen

Das im vorliegenden Ausführungsbeispiel angewendete Klassifikationsverfahren ist das sogenannte Random Forest-Verfahren, welches aus mehreren verschiedenen, unkorrelierten Entscheidungsbäumen besteht. Alle Entscheidungsbäume sind unter einer bestimmten Art von Randomisierung während des Lernprozesses gewachsen. Für eine Klassifikation darf jeder Baum in diesem Wald eine Entscheidung treffen und die Klasse mit den meisten Stimmen entscheidet die endgültige Klassifikation. Neben einer Klassifikation kann das Random Forest-Verfahren auch zur Regression eingesetzt werden.

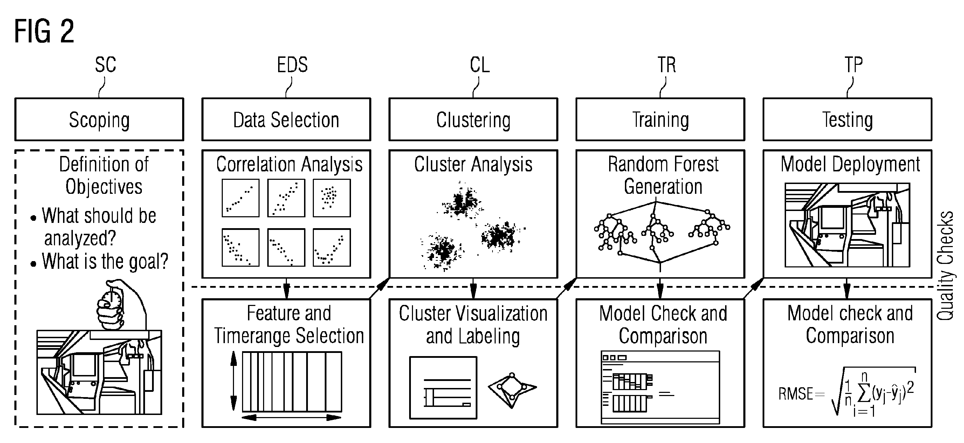

Die Vorgehensweise bei der Erstellung von Entscheidungsunterstützungselementen in einem WinCC OA SCADA -System wird anhand Fig. 2 näher erläutert.

In einem ersten Schritt "*Definition of Objectives, What should be analyzed?, what is the goal?",* dem sogenannten Scoping SC, werden die zu lösenden Aufgaben definiert.

Diese umfassen typisch Prognosen über das zeitliche Auftreten von Fehlern, sowie Hypothesen über die Ursache der auftretenden Fehler, wobei ein Fehler durch das Über- oder Unterschreitung eines oder mehrerer Grenzwerte vorgegebener Prozess- oder Anlagenparameter definiert ist.

Diese Über- oder Unterschreitung von Grenzwerten löst typisch einen Alarm aus, auf den das Bedienpersonal eines SCADA Systems reagieren muss.

Insbesondere in Fällen, die selten auftreten, ist das Bedienpersonal oftmals allerdings nicht in der Lage, von einem Alarm sofort auf die zugrunde liegende Fehlerursache zu schließen. Eine verzögerte oder gar eine falsche Reaktion in einem Fehlerfall kann aber zu Schäden im betroffenen Prozess oder der betroffenen Anlagen führen.

Erfindungsgemäß wird nun das Bedienpersonal in diesen Fällen zeitnah auf die möglichen Fehlerursachen hingewiesen, sodass eine rasche und zielgerichtete Reaktion möglich ist.

Voraussetzung dafür ist ein entsprechend eingerichtetes Entscheidungsunterstützungselement EE, bei welchem auf Basis der vordefinierten Aufgaben mithilfe einer "*Correlation Analysis*" eine Eingangsdatenselektion EDS "*Data Selection, Feature and Timerange Selection*" erfolgt, ein Clustering CL dieser selektierten Eingangsdaten mit Clusteranalyse "*Clusteranalysis*" und Visualisierung "*Cluster Visualization and Labeling*" sowie das Training TR des ausgewählten Klassifikationsmodells erfolgt.

Abschließend wird in einer Testphase "*Testing*" TP die Eignung des Entscheidungsunterstützungselementes unter realistischen Betriebsbedingungen "*Model Deployment, Model check and Comparison*" überprüft.

Als Clusteringverfahren kann beispielsweise ein Vektorquantifizierungsverfahren wie der k-Means-Algorithmus vorgesehen werden.

Das Ergebnis des Clusterings CL dient als Grundlage für die Klassifikation der Eingangsdaten bzw. für das Training des Klassifikationsverfahrens beispielsweise nach dem Random Forest-Verfahren " *Random Forest Generation*".

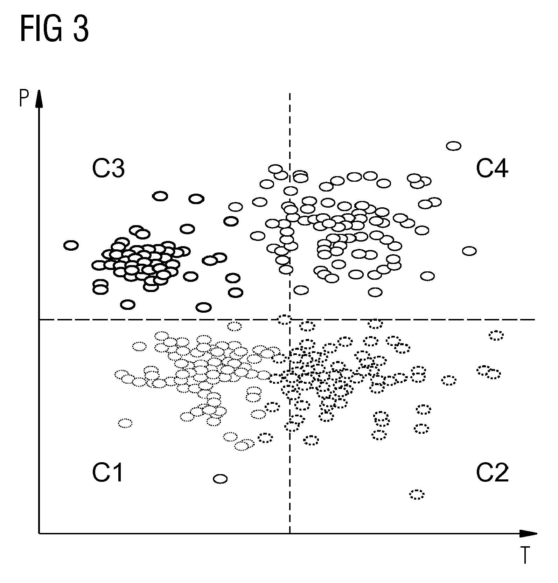

Fig. 3 zeigt den beispielhaften Einsatz eines Entscheidungsunterstützungselementes EE zur Datenselektion EDS und Clusteranalyse CL bei einem Elektromotor. Dabei werden als Eingangsparameter die Umgebungstemperatur T und die Leistungsaufnahme P vorgesehen. Die sich daraus ergebenden zweidimensionalen Vektoren Vn(Tn,Pn) können in einem Diagramm dargestellt und 4 unterschiedlichen Clustern C1, C2, C3, C4 , den Quadranten dieses Diagrammes zugeordnet werden.

Jeder Cluster stellt nun einen bestimmten Betriebszustand des Motors dar. Der erste Cluster C1 beschreibt den normalen Betriebszustand, in dem keine Maßnahmen notwendig sind. Der zweite Cluster C2 ist charakterisiert durch erhöhte Werte der Umgebungstemperatur, d.h. durch Überschreitung des vorgegebenen Grenzwertes der Umgebungstemperatur während die Leistungsaufnahme des Motors innerhalb der Normalwerte liegt und keine Grenzwertüberschreitung erfolgt.
Im dritten Cluster C3 liegt die Leistungsaufnahme P über dem zulässigen Grenzwert und im vierten Cluster C4 sind sowohl Leistungsaufnahme P als auch Umgebungstemperatur T erhöht.

Wenn nun im laufenden Betrieb ein neuer Datensatz oder ggf. eine Reihe von Datensätzen erfasst wird, dann wird dieser neue Wert oder ggf. ein Mittelwert der Reihe von Datensätzen einem Cluster zugeordnet (klassifiziert) und auf Grundlage dieser Klassifikation, d.h. der Zugehörigkeit zu einem bestimmten Cluster eine Maßnahme vorgeschlagen.

Während im ersten Cluster C1, d.h. im Normalbetrieb keine Maßnahmen nötig sind, sollte im zweiten Cluster bei erhöhter Umgebungstemperatur das Kühlsystem des Motors überprüft werden. Bei einer Klassifikation im dritten Cluster sollte die Spannungsversorgung des Motors überprüft werden, während bei Vorliegen von Daten im vierten Cluster C4 sowohl die Spannungsversorgung des Motors als auch die Kühlanlage des Motors überprüft werden sollten.

### Bezugszeichenliste

- C1: erster Cluster
- C2: zweiter Cluster
- C3: dritter Cluster
- C4: vierter Cluster
- P: Leistungsaufnahme
- T: Umgebungstemperatur
- PS: Präsentationsschicht
- ST: Steuerungsschicht
- GS: Geschäftslogikschicht
- DS: Datenzugriffschicht
- DB: Datenbank
- EE: Entscheidungsunterstützungselemente
- MG: Manager
- SC: Scoping
- EDS: Eingangsdatenselektion
- CL: Clusteranalyse
- TR: Training
- TP: Testphase

## Patentansprüche

1. System zum Steuern und Überwachen technischer Prozesse und Anlagen, welches Mittel zur Erfassung, Speicherung und Auswertung prozess- und anlagenrelevanter Daten (ST, GS, DS), Mittel zur Visualisierung (PS), Steuerungsmittel und Mittel zur Auslösung von Alarmen bei Über- oder Unterschreiten von Grenzwerten vorgegebener Prozess- oder Anlagenparameter umfasst, **dadurch gekennzeichnet, dass** in das System Entscheidungsunterstützungselemente (EE) integriert sind, welche auf Basis der gespeicherten prozess- und anlagenrelevanten Daten
- Prognosen über das zeitliche Auftreten von Fehlern und
- bei Auftreten eines Alarmes Hypothesen zur Ursache für die Über- oder Unterschreitung von Grenzwerten vorgegebener Prozess- oder Anlagenparameter erstellen.

2. System zum Steuern und Überwachen technischer Prozesse und Anlagen gemäß Anspruch 1, **dadurch gekennzeichnet, dass** die Entscheidungsunterstützungselemente (EE) auf Methoden der Knowledge Discovery und Datamining (KDD)-Prozesse beruhen.

3. System zum Steuern und Überwachen technischer Prozesse und Anlagen gemäß Anspruch 2, **dadurch gekennzeichnet, dass** die Entscheidungsunterstützungselemente (EE) Data-Mining-Analysen zur Lösung von Beobachtungsprobleme wie insbesondere Ausreißererkennung oder Clusteranalyse (CL)und Prognoseprobleme wie insbesondere Klassifikation oder Regressionsanalyse umfassen.

4. System zum Steuern und Überwachen technischer Prozesse und Anlagen gemäß Anspruch 3, **dadurch gekennzeichnet, dass** ein Klassifikationsverfahren nach dem Random Forest-Algorithmus vorgesehen ist.

5. System zum Steuern und Überwachen technischer Prozesse und Anlagen gemäß Anspruch 3 oder 4, **dadurch gekennzeichnet, dass** ein Vektorquantifizierungsverfahren als Clusteringverfahren (CL) vorgesehen ist.

6. System zum Steuern und Überwachen technischer Prozesse und Anlagen gemäß einem der Ansprüche 1 bis 5, **dadurch gekennzeichnet, dass** das System Mittel zum Training (TR) der Entscheidungsunterstützungselemente (EE) mit archivierten prozess- und anlagenrelevanten Daten umfasst und dass Mittel zur Steuerung des Trainingsvorganges (TR) vorgesehen sind.

7. System zum Steuern und Überwachen technischer Prozesse und Anlagen gemäß einem der Ansprüche 1 bis 6, **dadurch gekennzeichnet, dass** auf der Grundlage der
- Prognosen über das zeitliche Auftreten von Fehlern und
- Der bei Auftreten eines Alarmes erstellten Hypothesen zur Ursache für die Über- oder Unterschreitung von Grenzwerten vorgegebener Prozess- oder Anlagenparameter
- Alarme mit unterschiedlicher Priorität generiert werden.
